(19) Europäisches Patentamt
European Patent Office
Office européen des brevets

(11) Numéro de publication: **0 166 638**
**B1**

(12) **FASCICULE DE BREVET EUROPEEN**

(45) Date de publication du fascicule du brevet: **31.08.88**

(51) Int. Cl.⁴: **C 07 F 7/12**

(21) Numéro de dépôt: **85401024.6**

(22) Date de dépôt: **24.05.85**

(54) **Procédé de préparation d'organosilanes et d'organopolysilanes à partir d'organodisilanes.**

(30) Priorité: **30.05.84 FR 8408511**

(43) Date de publication de la demande:
**02.01.86 Bulletin 86/01**

(45) Mention de la délivrance du brevet:
**31.08.88 Bulletin 88/35**

(84) Etats contractants désignés:
**DE FR GB**

(56) Documents cités:
**US-A-4 059 607**

**E.V. DEHMLOW et al.: "Phase transfer catalysis", 2ème édition, 1983, page 52, Verlag Chemie, Weinheim, DE.**

**Le dossier contient des informations techniques présentées postérieurement au dépôt de la demande et ne figurant pas dans le présent fascicule.**

(73) Titulaire: **RHONE-POULENC CHIMIE**
**25, quai Paul Doumer**
**F-92408 Courbevoie Cédex (FR)**

(72) Inventeur: **Soula, Gérard**
**33, rue Nungesser**
**F-69330 Meyzieu (FR)**
Inventeur: **Simonnet, Christian**
**31, rue Komarov**
**F-69200 Venissieux (FR)**

(74) Mandataire: **Seugnet, Jean Louis et al**
**RHONE-POULENC INTERSERVICES Service Brevets Chimie Centre de Recherches de Saint-Fons B.P. 62**
**F-69192 Saint-Fons Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 166 638 B1

Courier Press, Leamington Spa, England.

**Description**

La présente invention concerne un procédé de préparation d'organosilanes et d'organopolysilanes a partir d'organodisalanes.

On a déjà décrit divers procédés de préparation d'organosilanes et/ou éventuellement d'hydrogéno-organosilanes à partir d'organohalogénodisilanes.

En particulier divers procédés de traitement des résidues de la synthèse directe des méthylchlorosilanes (réaction du chlorure de méthyle sur du silicium en présence de cuivre décrite dans les brevets US 2 380 995 et 2 488 487) qui sont constituées par des mélanges de composés dont, entre autres, des disilanes, sont par exemple décrits dans les brevets français 1 093 399, 2 163 579 et 2 163 579.

Ainsi selon le brevet français 1 093 399 on scinde des disilanes par chauffage à une température comprise entre 200 et 300°C en présence d'acide chlorhydrique.

Selon le brevet français 2 163 579, on fait réagir un disilane avec un halogénure en présence de platine ou palladium, cu d'un complexe phosphine du platine, du palladium et du nickel.

Selon le brevet français 2 342 981, on fait réagir les disilanes avec de l'hydrogène gazeux sous pression en présence d'une base aprotique tel que l'hexaméthylphosphotriamide.

Les procédés connus permettent d'aboutir à un· résultat mais ils présentent au moins un des inconvénients ci-dessous:

— le procédé exige des conditions de température ou de pression rendant difficile et coûteux une exploitation industrielle;

— les catalyseurs et/ou les réactifs utilisés sont toxiques, coûteux, et/ou instables à l'air.

— la durée de la réaction est trop longue et/ou les rendements sont médiocres.

Le but de la présente invention est de proposer un procédé de préparation d'organosilanes et de polysilanes à partir d'organohalogénodisilanes qui ne présentent pas les inconvénients indiqués ci-dessus des procédés de l'art antérieur et qui puisse être mis en oeuvre en l'absence d'acide chlorhydrique gazeux, à température peu élevée et à pression atmosphérique, avec une durée de réaction courte, avec un bon rendement en organohalogénosilanes et suivant un taux de scission des disilanes élevé.

Ces buts et d'autres sont atteints par la présente invention qui concerne en effet un procédé de préparation d'organosilanes et d'organoolysilanes par mise en contact sous atmosphère inerte d'au moins (1) un disilane de formule:

$$(R)_3\,Si—Si\,(R)_3 \qquad (I)$$

dans laquelle les radicaux R identiques ou différents représentent un radical hydrocarboné choisi parmi un radical alkyle en $C_1$—$C_6$, un atome d'hydrogène, un radical trifluoro-3,3,3 propyle, un radical triméthylsiloxy et un atome d'halogène choisi parmi le fluore, le chlore, le brome et l'iode, au moins un des radicaux R étant un atome d'halogène avec (2) une quantité catalytiquement efficace d'un système catalytique comprenant

(a) au moins un sel minéral ionique de formule:

$$M^+\,A^-$$

dans laquelle $M^+$ représente un cation d'un métal alcalin choisi parmi le lithium, le sodium, le potassium, le rubidium et le césium et $A^-$ représente un anion halogénure choisi parmi un anion fluorure, chlorure, bromure et iodure et

(b) au moins un composé complexant le cation $M^+$ dudit sel (a).

De préférence dans la formule (I) ci-dessus sur au moins un des deux atomes de silicium, au moins un des radicaux R, de façon encore plus préférée au moins 2, est un atome d'halogène.

Le procédé selon l'invention s'applique de préférence à des disilanes de formule (I) dans laquelle les radicaux R sont choisis parmi le radical méthyle et un atome de chlore. Ces disilanes sont des produits bien connus et, en particulier, les disilanes à substituants méthyle et chlore ci-dessus sont présents dans le résidu de la synthèse directe des chlorosilanes.

Les disilanes préférés pour la mise en oeuvre du procédé selon l'invention sont le tétraméthyldichloro-1,2 disilane $Cl(CH_3)_2\,Si_2$, le triméthyl trichloro-1,1,2 disilane, $CH_2\,Cl_2\,Si\,Si\,Cl\,(CH_3)_2$, le tétrachloro diméthyl-1,2 disilane $(Cl_2\,CH_3\,Si)_2$ et le tétraméthyl dichloro-1,1 disilane $CH_3\,Cl_2\,Si\,Si\,(CH_3)_3$ utilisés seuls ou en mélange.

Ces disilanes se retrouvent en mélange principalement dans les fractions de résidu de la synthèse directe distillant entre 151° et 155°C, de préférence entre 152° et 154°C.

Dans le système catalytique selon l'invention le métal alcalin préfére est le lithium et les sels minéraux préférés sont le fluorure, le chlorure et le bromure de lithium.

Par atmosphère inerte, on entend que la mise en contact des disilanes avec le système catalytique est mise en oeuvre sour un gaz inerte tel que l'argon, l'azote ou l'hélium dans des conditions sensiblement anhydres. Par conditions sensiblement anhydres, on entend une absence quasi complète d'humidité bien que des traces d'eau puissent être tolérées.

Dans le cas ou le procédé selon l'invention est appliqué à un mélange très riche (plus de 90% molaire

environ) de composés scindables, on obtient généralement un rendement pondéral en monosilanes compris entre environ 45 et 85% en poids par rapport au poids du disilanes de départ, le restant étant transformé en polysilane comportant essentiellement des motifs méthylchlorosilylène $CH_3Cl\ Si<$.

Les silanes obtenus sont alors essentiellement le méthyltrichlorosilane et le diméthyldichlorosilane qui constituent les matières premières indispensables pour la synthèse des silicones.

Selon un premier mode particulier et préféré de l'invention on utilise comme composé complexant (b) un agent sequestrant de formule:

$$N\text{-}[CHR_1\text{—}CHR_2\text{—}O(CHR_3\text{—}CH\ R_4\text{—}O)_n\text{—}R_5]_3 \qquad (II)$$

dans laquelle n est un nombre entier compris entre 0 et 10 inclus, $R_1$, $R_2$, $R_3$ et $R_4$, identiques ou différents, sont chosis parmi un atome d'hydrogène et un radical alkyle en $C_1$—$C_4$ et $R_5$ est un radical choisi parmi un radical alkyle ou cycloalkyle en $C_1$—$C_{12}$, un radical alkylphényle ou phénylalkyle dont la partie alkyle est en $C_1$—$C_{12}$.

Les agents complexants de formule (II) utilisés dans le système catalytique sont des produits bien connus qui sont notamment décrits dans les brevets français 1 302 365 et 2 450 120 cités comme références.

Selon un mode de réalisation préférentiel de l'invention, on utilise un agent sequestrant de formule (II) dans laquelle $R_1$, $R_2$, $R_3$ et $R_4$ représentent un atome d'hydrogène ou un radical méthyle, $R_5$ et n ayant la signification précédente.

Parmi ces derniers, on préfère encore plus particulièrement mettre en oeuvre les agents séquestrants pour lesquels n est supérieur ou égal à 0 et inférieur ou égal à 6 et pour lesquels $R_5$ représente un radical alkyle ayant de 1 à 4 atomes de carbone.

On peut citer:

— la tris(oxa-3 butyl)amine de formule:
$N\text{-}(CH_2\text{—}CH_2\text{—}O\text{—}CH_3)_3$

— la tris(dioxa-3,6 heptyl)amine de formule:
$N\text{-}(CH_2\text{—}CH_2\text{—}O\text{—}CH_2\text{—}CH_2\text{—}CH_2\text{—}O\text{—}CH_3)_3$

— la tris(trioxa-3,6,9 décyl)amine de formule:
$N\text{-}(CH_2\text{—}CH_2\text{—}O\text{—}CH_2\text{—}CH_2\text{—}O\text{—}CH_2\text{—}O\text{—}CH_3)_3$

— la tris(dioxa-3,6 octyl)amine de formule:
$N\text{-}(CH_2\text{—}CH_2\text{—}O\text{—}CH_2\text{—}CH_2\text{—}O\text{—}C_2H_5)_3$

— la tris(trioxa-3,6,9 undécyl)amine de formule:
$N\text{-}(CH_2\text{—}CH_2\text{—}O\text{—}CH_2\text{—}CH_2\text{—}O\text{—}CH_2\text{—}CH_2\text{—}O\text{—}C_2H_5)_3$

— la tris(dioxa-3,6 nonyl)amine de formule:
$N\text{-}(CH_2\text{—}CH_2\text{—}O\text{—}CH_2\text{—}CH_2\text{—}O\text{—}C_3H_7)_3$

— la tris(trioxa-3,6,9 dodécyl)amine de formule:
$N\text{-}(CH_2\text{—}CH_2\text{—}O\text{—}CH_2\text{—}CH_2\text{—}O\text{—}CH_2\text{—}CH_2\text{—}O\text{—}C_3H_7)_3$

— la tris(dioxa-3,6 décyl)amine de formule:
$N\text{-}(CH_2\text{—}CH_2\text{—}O\text{—}CH_2\text{—}CH_2\text{—}O\text{—}C_4H_9)_3$

— la tris(trioxa-3,6,9 tridécyl)amine de formule:
$N\text{-}(CH_2\text{—}CH_2\text{—}O\text{—}CH_2\text{—}CH_2\text{—}O\text{—}CH_2\text{—}CH_2\text{—}O\text{—}C_4H_9)_3$

— la tris(tetra-oxa-3,6,9,12 tridecyl) amine de formule:
$N\{CH_2\text{—}CH_2\text{—}O\text{-}(CH_2\text{—}CH_2\text{—}O)_3\text{—}CH_3\}_3$

— la tris(hexa-oxa-3,6,9,12,15,18 nonadecyl)amine de formule:
$N\text{—}\{CH_2\text{—}CH_2\text{—}O\text{—}(CH_2\text{—}CH_2\text{—}O)_5\ CH_3\}_3$

— la tris(dioxa-3,6 méthyl-4 heptyl) amine de formule:
$N\text{—}\{CH_2\text{—}CH_2\text{—}OCH\text{—}(CH_3)\text{—}CH_2\text{—}O\text{—}CH_3\}_3$

— la tris(dioxa-3,6 diméthyl-2,4 heptyl) amine de formule:
$N\text{—}\{CH_2CH\text{—}(CH_3)\text{—}OCH(CH3)\text{—}CH_2\text{—}O\text{—}CH_3\}_3$.

Selon un mode de mise en oeuvre particulier de l'invention, on utilise comme composé complexant les agents séquestrants, greffés sur des supports polymères organiques réticulés. Ces composés complexants greffés sont notamment ceux décrits dans la demande de brevet européen No. 46706 qui est citée comme référence.

Les agents séquestrants greffés décrits dans la demande de brevet européen No. 46706 sont caractérisés en ce qu'ils sont constitués par un support polymère organique réticulé et par une pluralité de groupes fonctionnels, fixés sur ledit support, de formule générale:

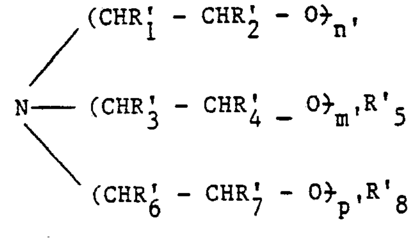

(III)

dans laquelle $R'_1$, $R'_2$, $R'_3$, $R'_4$ $R'_6$ et $R'_7$ identiques ou différents sont choisis parmi un atome d'hydrogène et un radical alkyle ayant de 1 à 4 atomes de carbone, $R'_5$ et $R'_8$ identiques cu différents sont choisis parmi un atome d'hydrogène, un radical alkyle ou cycloalkyle ayant de 1 à 12 atomes de carbone, un radical phényle, un radical alkylphényle ou phénylalkyle dont la partie alkyle est en $C_1$—$C_{12}$ et dans laquelle n', m', et p' identiques ou différents sont supérieurs ou égaux à 1 et inférieurs opu égaux à 10.

Bien que cela ne soit pas complètement démontré, il apparaît que l'invention repose sur le fait que l'agent complexant complexe le cation $M^+$ du sel minéral ionique et permet la dissociation et la solubilisation au moins partielle du sel dans le milieu réactionnel.

Selon un autre mode de réalisation préféré de l'invention, on utilise un agent séquestrant supporté constitué par un support polymère organique réticulé et par une pluralité de groupes fonctionnels fixés sur ledit support, de formule générale (III) dans laquelle $R'_1$, $R'_2$, $R'_3$, $R'_4$ $R'_6$ et $R'_7$ identiques ou différents, représentent un atome d'hydrogène ou le radical méthyle et $R'_5$ et $R'_8$ identiques ou différents représentent un atome d'hydrogène ou un radical alkyle en $C_1$—$C_4$. Selon un autre mode de réalisation préférentiel de l'invention n', m' et p' identiques ou différents sont supérieurs ou égaux à 1 et inférieurs ou égaux à 6.

On peut citer comme exemples de groupes fonctionnels, les groupes de formules suivantes:

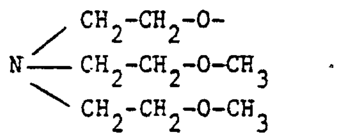

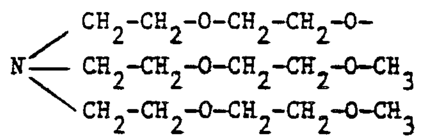

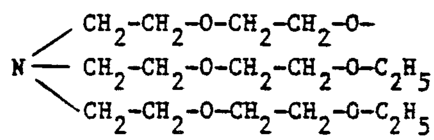

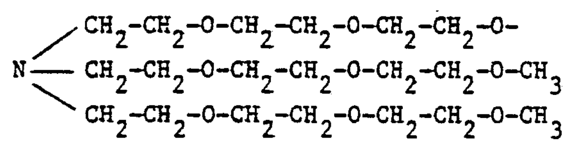

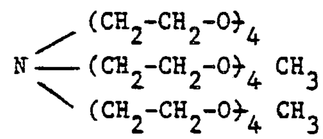

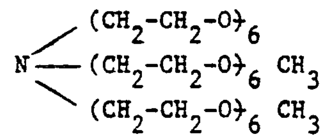

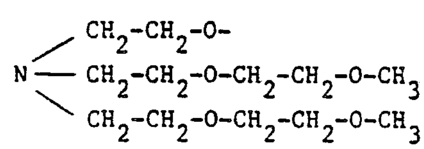

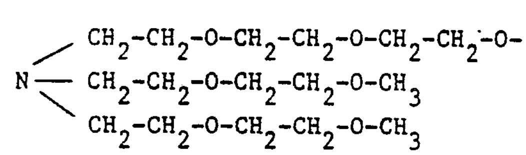

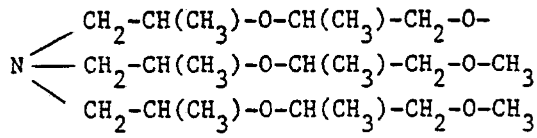

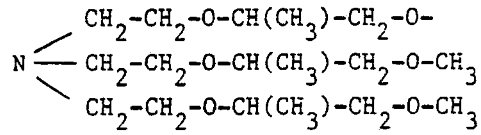

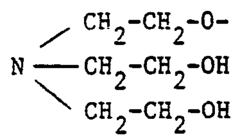

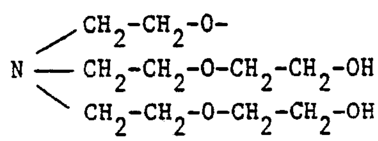

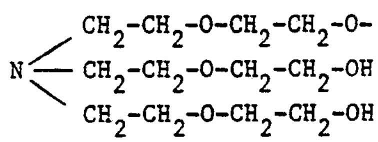

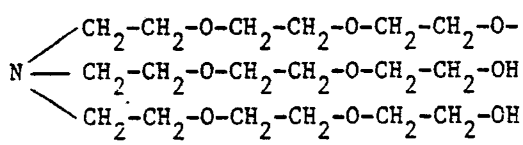

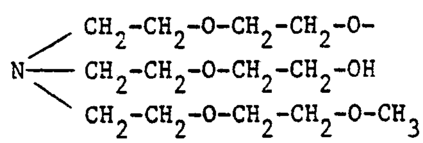

Le support peut dériver de tout polymère organique réticulé comportant des groupements substituables par les groupements fonctionnels de formule (III).

On peut citer comme exemples de polymères organiques adaptés à la présente invention, les polymères dérivés de composés vinylaromatiques tels que le styrène, le methylstyrène et les copolymères de composés vinylaromatiques et de diènes conjugués en $C_4$—$C_6$ tels que les copolymères du styrène et du butadiène et du styrène et de l'isoprène.

On préfère tout particulièrement utiliser comme polymère organique le polystyrène, l'agent de réticulation étant alors, suivant un mode de réalisation préférentiel, le divinylbenzène. Le taux de réticulation est un facteur important, Il est en effet nécessaire que les groupes fonctionnels de formule (III) greffés sur le polystyrène soient actifs. Pour cela, il faut que les molécules du solvant dans lequel l'agent séquestrant supporté sera mis en oeuvre, dans les applications précisées plus loin, pénètrent à l'intérieur du polymère. Dans ce but, il est nécessaire que le taux de réticulation ne soit pas trop important pour ne pas empêcher la pénétration du solvant et des réactifs. On préfère utiliser un polystyrène dont le taux de réticulation par le divinylbenzène est inférieur à environ 10%. Encore plus préférentiellement, le taux de réticulation est inférieur à 5% environ.

Le groupement substituable est de préférence le chlore ou le brome du radical chloro ou bromo methyl —$CH_2Cl$ ou —$CH_2Br$ fixé sur le noyau benzénique du polystyrène.

On préfère tout particulièrement que le pourcentage de noyaux benzéniques du polystyrène portant un groupement fonctionnel soit supérieur à 5%. Encore plus préférentiellement, ce pourcentage est supérieur à 10%.

On peut représenter les agents séquestrants supportés préférés par la formule suivante:

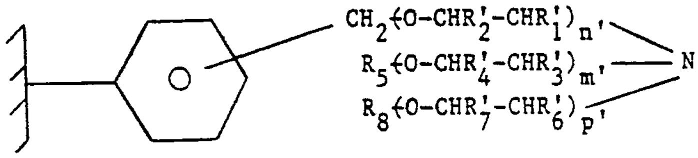

Selon un deuxième mode de mise en oeuvre particulier de l'invention, le composé complexant (b) est un polyéther macrocyclique ayant de 15 à 30 atomes dans le cycle et constitué de 4 à 10 unités —O—X dans lesquelles X est soit $—CHR_5—CHR_7—$ soit $—CHR_6—CHR_8—CR_9R_7—$, $R_6$, $R_7$, $R_8$ et $R_9$ identiques ou différents étant un atome d'hydrogène ou un radical alkyle ayant de a à 4 atomes de carbone, un des X pouvant être $—CHR_6—CHR_8—CR_9R_7—$ quand les unités —O—X comprennent le groupement $—O—CHR_6—CHR_7$.

Selon un troisième mode de mise en oeuvre particulier de l'invention, le composé complexant (b) est un composé macrocyclique ou bicyclique de formule générale IIa ou IIb

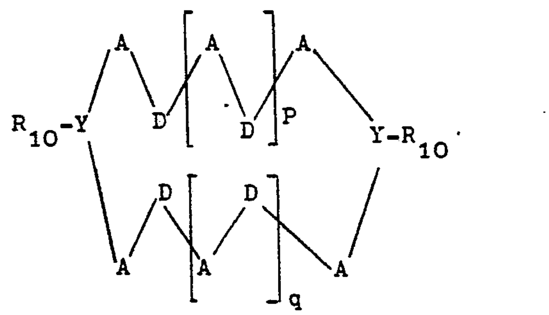

(IIa)

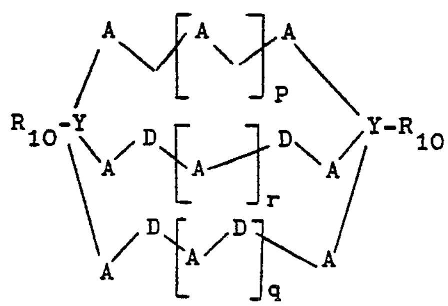

(IIb)

dans lesquelles:

— Y représente N ou P

— A représente un groupement alkylène ayant de 1 à 3 atomes de carbone

— D représente O, S ou $N—R_{11}$ où $R_{11}$ représente un radical alkyle ayant de 1 à 6 atomes de carbone

— $R_{10}$ représente un radical alkyle ayant de 1 à 6 atomes de carbone, p, q et r identiques ou différents sont des nombres entiers compris entre 1 et 5.

Selon un quatrième mode de mise en oeuvre particulier de l'invention, on utilise comme composé complexant (b) les polyéthers macrocycliques (encore nommés "Ethers Couronne") et les composés macrocycliques ou bicycliques (encore nommés "Cryptants") greffés sur des supports polymères organiques réticulés. Ces composés complexants greffés sont notamment ceux décrits dans l'article Angew. Chem. Int. Ed. Engl. 18, 421—429 (1979) lorsque'l s'agit des Ethers Couronne ou des Cryptants greffés.

Les polyéthers macrocycliques qui peuvent être mis en oeuvre dans le procédé selon l'invention sont connus sous l'appellation générale d'"éthers couronnes" et sont décrits dans le brevet français 69.43879 publié sous le numéro 2 026 481.

On peut citer comme exemples d'éthers couronnes pouvant être utilisés selon l'invention:

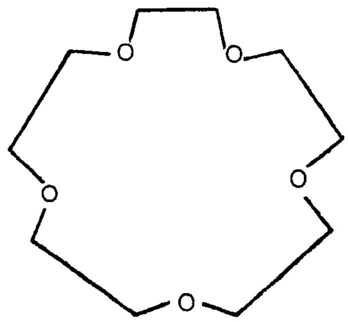

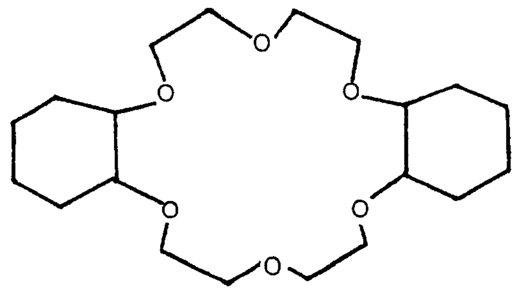

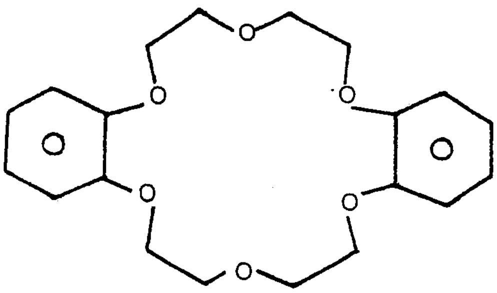

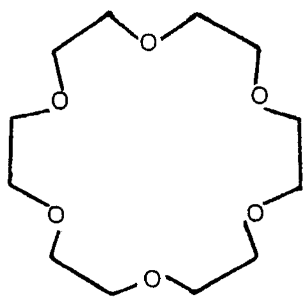

Les composés macrocycliques et bicycliques sont décrits dans le brevet français 70.21079 publié sous le numéro 2 052 947. On peut citer comme exemples de tels composés concernant la mise en oeuvre du procédé selon l'invention:

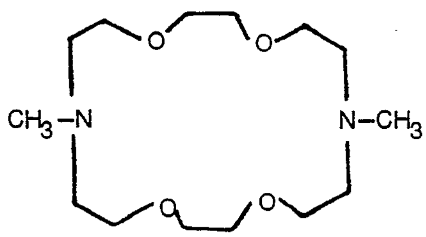

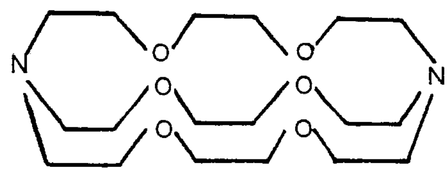

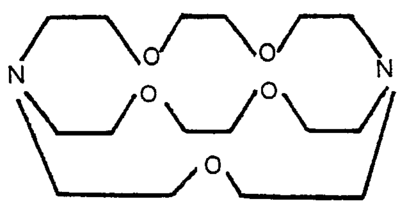

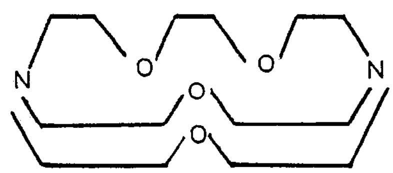

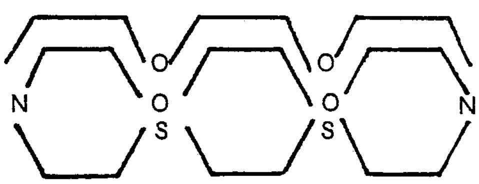

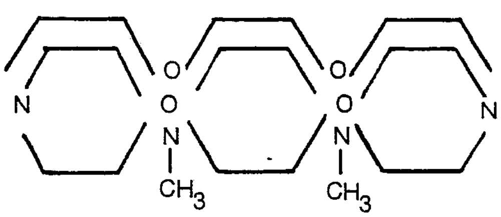

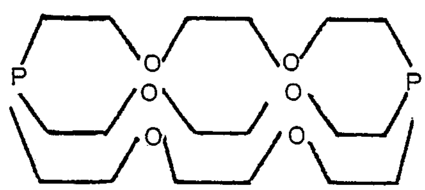

Selon un autre mode de réalisation préférentiel de l'invention, on utilise un polyéther macrocyclique ou un composé macrocyclique ou bicyclique greffé sur un polymère organique réticulé qui est constitué

d'un polystyrène obtenu par réaction du dérivé aminé approprié, du polyéther macrocyclique ou du composé macrocyclique ou bicyclique avec un polystyrène chlorométhylé. On peut représenter ces produits supportés préférés par les formules suivantes:

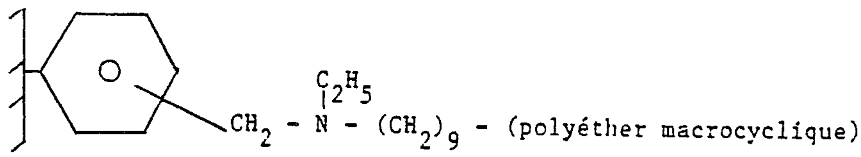

et

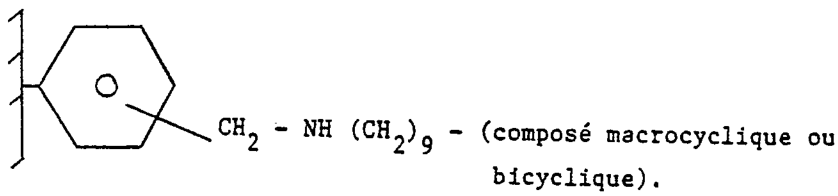

Le procédé selon l'invention peut être mis en oeuvre en présence ou en l'absence de solvant. Dans ce dernier cas, c'est le disilane ou le mélange de disilanes de départ qui joue le rôle de solvant. Quand on utilise un tiers solvant, ce dernier doit répondre à un certain nombre de conditions: il faut qu'il solubilise le disilane de départ; il faut aussi qu'il soit inerte chimiquement vis-à-vis des silanes et polysilanes introduits ou formés.

On choisit, le préférence, un solvant comme par exemple, l'anisole, le chlorobenzène, l'orthodichlorobenzène, le toluène, le dichlorobenzène, le dioxane, le dométhoxyéthane. L'anisole et le chlorobenzène sont les solvants préférés.

Le choix de l'agent sequestrant de formule (II) le plus adapté à la mise en oeuvre du procédé selon l'invention se fait, en outre, en tenant compte de la taille du cation du sel minéral ionique. Plus la taille du cation sera importante, plus le nombre d'atomes d'oxygène contenus dans la molécule de l'agent sequestrant devra être élevé.

Le procédé selon l'invention est mis en oeuvre de préférence à une température comprise entre 80 et 200°C, de préférence entre 100 et 150°C, ceci constitue un des avantages du procédé selon l'invention.

On opère de préférence à la pression atmosphérique. Bien entendu, des pressions supérieures ou inférieures à la pression atmosphérique ne sont pas exclues.

On utilise l'agent complexant (b) en quantité telle que le rapport molaire de l'agent complexant au sel minéral ionique est, de préférence, compris entre 0,001 et 10. Encore plus préférentiellement, ce rapport est compris entre 0,02 et 2.

Le rapport molaire du sel minéral ionique au disilane de départ est compris de préférence entre 1 et 0,001. Encore plus préférentiellement, il est compris entre 0,5 et 0,01.

Les silanes obtenus par la réaction de coupure peuvent être soit séparés au fur et à mesure de leur formation s'ils sont peu solubles dans le milieu réactionnel et suffisamment volatils, soit séparés en fin de réaction selon les techniques bien connues de l'homme de l'art comme, par exemple, par distillation, solubilisation sélective, etc.

Les agents complexants greffés mis en oeuvre selon l'invention permettent de travailler de préférence en continu sur colonne, alors que les agents complexants non greffés permettent de travailler de préférence en discontinu.

La présente invention permet ainsi d'opérer la coupure des disalines à température peu élevée et avec un rendement exceptionnel tout en mettant en oeuvre de faibles quantités de catalyseur.

D'autres caractéristiques et avantages de l'invention apparaîtront plus clairement à la lecture des exemples suivants donnés à titre illustratif nullement limitatif.

### Exemple 1

Dans un réacteur de 1 litre équipé d'un agitateur central, d'un thermomètre, d'une colonne garnie de Raschings, d'un réfrigérant d'un récepteur et d'une arrivée d'argon, on charge 150 g de disilanes formés de:

— 0,198 mole de triméthyl trichloro-1,1,2 disilane
— 0,439 mole de tétrachloro diméthyl-1,2 disilane
— 7,5 g, soit 0,0230 mole, de tris (dioxa-3,6 heptyl amine dénommé par la suite T DA[1]
— 1 g de fluorure de lithium anhydre, soit 0,0384 mole.

On agite le tout en chauffant et on commence à distiller des quantités appréciables de monosilanes ($Cl_2$ $Si (CH_3)_2$ et $CH_3$ $Si$ $Cl_3$) vers 110°C dans le récteur. On arrête la réaction au bout de 9 minutes, la température atteignant 150°C dans le réacteur. On obtient en fond de réacteur un culot solide formé essentiellement de polyméthylchlorosilanes. Le rendement pondéral en monosilanes par rapport au poids de disilanes introduit (taux de scission) est de 55,6%. Par rapport au poids de disilanes scindés, le rendement pondéral en méthyl chlorosilane est de 79,6% et celui en diméthyldichlorosilane est de 87,6%.

Exemples 2 à 9

On reproduit le mode opératoire de l'exemple 1 avec le même nombre de moles de réactif et de système catalytique sauf que l'on modifie la nature de l'halogénure alcalin. Les résultats sont rassemblés dans le tableau I ci-après. De ce tableau, il apparaît que les sytèmes T $DA_1$ + Li Br ou Li Cl ou Li F sont les plus actifs.

L'exemple 9 est un exemple comparatif démontrant que la présence d'agent sequestrant est indispensable dans le système catalytique.

TABLEAU I

| Ex. | Catalyseur | Durée en h et mn | Taux pondérel de scission % | Rendement pondérel en $SiCl_3$ % | Rendement pondérel en $(CH_3)_2SiCl_2$ % |
|---|---|---|---|---|---|
| 1 | T $DA_1$+LiF | 9 mn | 55,6 | 79,6 | 87,6 |
| 2 | T $DA_1$+LiCl | 11 mn | 51 | 64 | 88,8 |
| 3 | T $DA_1$+NaCl | 2 h 55 mn | 53,3 | 82 | 87,5 |
| 4 | T $DA_1$+LiBr | 14 mn | 58 | 84,9 | 93,2 |
| 5 | T $DA_1$+LiI | 21 mn | 50 | 66,3 | 89 |
| 6 | T $DA_1$+NaF | 3 h 15 mn | 48,6 | 68,7 | 85,4 |
| 7 | T $DA_1$+KF | 4 h 05 mn | 48,6 | 70,6 | 82,9 |
| 8 | T $DA_1$+NaI | 3 h | 14,6 | 16,80 | 35,4 |
| 9 | LiCl | 4 h | 0 | 0 | 0 |

Exemple 10

On reproduit le mode opératoire de l'exemple 1 sauf que l'on charge au préalable dans le réacteur 200 ml d'anisole.

Les résultats obtenus sont pratiquement identiques à ceux obtenus à l'exemple 1 lorsque l'on opère sans solvant.

Exemples 11 à 14

Dans ces exemples, le procédé de l'invention est mis en oeuvre en continu dans un réacteur en verre de 1 litre maintenu sous agitation, comportant un systèe d'alimentation continue de sidilanes, un système de soutirage continu de la phase liquide et une colonne à distiller garnie d'anneaux Raschig®, avec un taux de reflux variable.

Le mélange de disilanes alimenté en continue a la composition pondérale suivante:

— diméthyl-1,2 tétrachlorodisilane: 46,6%
— triméthyl-1,1,2 trichlorodisilane; 39,3%
— autres disilanes: 14,1%

Le catalyseur (halogénure alcalin dissout dans la TDA 1) est introduit en mélange avec les disilanes.

Dans les exemples 11 à 14, les paramètres suivants ont été modifiés:

Ex. 11 et 12: nature de l'halogénure (fluorure et chlorure).

Ex. 12, 13 et 14: temps de séjour, température dans le réacteur et taux de reflux de la colonne.

Les conditions opératoires et résultats sont rassemblés dans le tableau II ci-après:

TABLEAU II

| Exemples | 11 | 12 | 13 | 14 |
|---|---|---|---|---|
| Système catalytique | LiF/ TDA 1 | LiCl/ TDA 1 | LiCl/ TDA 1 | LiCl/ TDA 1 |
| % en poids catalyseur P/P (1) | 0,5 | 0,5 | 0,5 | 0,5 |
| Lix/$TDA_1$ (2) | 0,10 | 0,03 | 0,03 | 0,03 |
| Température (° C) | 160 | 160 | 170 | 160 |
| Temps de séjour (h) | 1,75 | 2,17 | 2,05 | 3,00 |
| Taux de reflux dans la colonne | | 0,3/1 | 1,3/1 | 2/1 |
| Productivité (par heure) | 11 | 12 | 13 | 14 |
| Kg $Me_2SiCl_2$ par kg de disilanes ayant réagi | 0,230 | 0,190 | 0,205 | 0,202 |
| Kg $MeSiCl_3$ par kg de disilanes ayant réagi | 0,384 | 0,342 | 0,388 | 0,375 |
| Kg $Me_3SiCl$ par kg de sidilanes ayant réagi | 0,007 | 0,010 | 0,011 | 0,011 |
| Kg $MeHSiCl_2$ par kg de disilanes ayant réagi | 0,001 | 0,002 | 0,002 | 0,002 |
| Kg organosilanes par kg de disilanes ayant réagi | 0,622 | 0,544 | 0,606 | 0,590 |
| % pondéral de sidilanes et de polysilanes dans les produits distillés par rapport au poids total de tous les produits obtenus | 5,8 | 1,5 | 0,27 | 0,23 |

(1) % en poids du système catalytique par rapport au poids total du mélange réactionnel dans le réacteur (y compris le poids du système catalytique)

(2) rapport en poids

## Revendications

1. Procédé de préparation d'organosilanes et d'organopolysilanes par mise en contact d'organodisilanes en présence d'un système catalytique, caractérisé en ce qu'il comporte la mise en contact, sous atmosphère inerte, d'au moins (1) un disilane de formule:

$$(R)_3\text{—Si—Si}(R)_3 \qquad (I)$$

dans laquelle les radicaux R, identiques ou différents, représentent un radical hydrocarboné choisi parmi un radical alkyle en $C_1$—$C_6$, un atome d'hydrogène, un radical trifluoro-3,3,3 propyle, un radical triméthylsiloxy et un atome d'halogène choisi parmi le fluore, le chlore, le brome et l'iode, au moins un des radicaux R étant un atome d'halogène avec (2) une quantité catalytiquement efficace d'un système catalytique comprenant (a) au moins un sel minéral ionique de formule: $M^+ A^-$ dans laquelle $M^+$ représente un cation d'un métal alcalin choisi parmi le lithium, le sodium, le potassium, le rubidium et le

césium et $A^-$ représente un anion halogénure choisi parmi un anion fluorure, chlorure, bromure et iodure et (b) au moins un composé complexant le cation $M^+$ dudit sel (a).

2. Procédé selon la revendication 1, caractérisé en ce que le composé complexant (b) est un agent sequestrant de formule:

$$N-[CHR_1 - CHR_2 - O-(CHR_3-CHR_4 - O)_n R_5]_3 \qquad (II)$$

dans laquelle n est un nombre entier compris entre 0 et 10 inclus; $R_1$, $R_2$, $R_3$ et $R_4$, identiques ou différents, sont choisis parmi un atome d'hydrogène et un radical alkyle en $C_1$—$C_4$ et $R_5$ est un radical choisi parmi un radical alkyle ou cycloalkyle en $C_1$—$C_{12}$, un radical alkylphényle ou phénylalkyle dont la partie alkyle est en $C_1$—$C_{12}$.

3. Procédé selon la revendication 1, caractérisé en ce que le composé complexant est un polyéther macrocyclique ayant de 15 à 30 atomes dans le cycle et constitué de 4 à 10 unités —O—X dans lesquelles X est soit —$CHR_6$—$CHR_7$— soit —$CHR_6$—$CHR_8$—$CR_9R_7$—, $R_6$, $R_7$, $R_8$ et $R_9$ identiques ou différents étant un atome d'hydrogène ou un radical alkyle ayant de 1 à 4 atomes de carbone, un des X pouvant être —$CHR_6$—$CHR_8$—$CR_9R_7$— quand les unités —O—X comprennent le groupement —O—$CHR_6$—$CHR_7$—.

4. Procédé selon la revendication 1 caractérisé en ce que le composé complexant est un composé macrocyclique ou bicyclique de formule générale IIa ou IIb

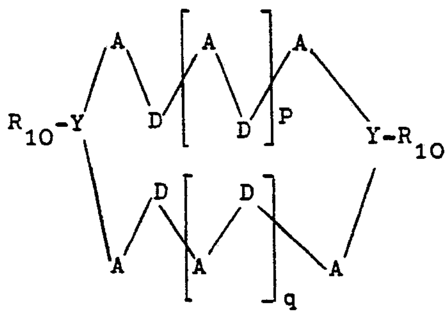

(IIa)

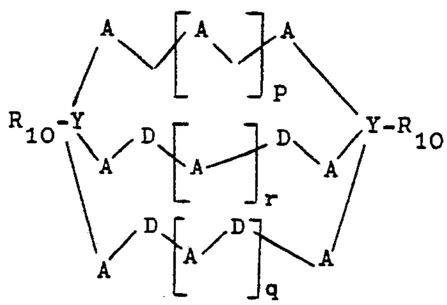

(IIb)

dans lesquelles:

— Y représente N ou P

— A représente un groupement alkylène ayant de 1 à 3 atomes de carbone

— D représente O, S, ou N—$R_{11}$ où $R_{11}$ représente un radical alkyle ayant de 1 à 6 atomes de carbone

— $R_{10}$ représente un radical alkyle ayant de 1 à 6 atomes de carbone, p, 1 et r, identiques ou différents, sont des nombres entiers compris entre 1 et 5.

5. Procédé selon la revendication 1, caractérisé en ce que le composé complexant est choisi parmi les agents sequestrants, les polyéthers macrocycliques et les composés macrocycliques ou bicycliques, greffés sur des des supports polymères organiques réticulés.

6. Procédé selon l'une quelconque des revendications précédentes, caractérisé en ce que sur au moins un des atomes de silicium des disilanes de formule (I) au moins deux des radicaux R, est un atome d'halogène.

7. Procédé selon l'une quelconque des revendications 1 à 6, caractérisé en ce que dans la formule (I), les radicaux R représentent un radical méthyle ou un atome de chlore.

8. Procédé selon la revendication 7, caractérisé en ce que les disilanes de formule (I) sont choisis parmi le tétraméthyl dichloro-1,2-disilane, le triméthyl trichloro-1,1,2 disilane, le tétrachloro diméthyl-1,2 disilane et le tétraméthyl dichloro-1,1 disilane.

9. Procédé selon l'une quelconque des revendications précédentes, caractérisé en ce que le cation du sel minéral ionique $M^+A^-$ est le lithium.

10. Procédé selon la revendication 9, caractérisé en ce que le sel minéral ionique $M^+A^-$ est choisi parmi le fluorure, le chlorure et le bromure de lithium.

11. Procédé selon la revendication 2, caractérisé en ce que dans la formule (II), les radicaux $R_1$, $R_2$, $R_3$ et $R_4$ représentent un atome d'hydrogène ou un radical méthyle, n est compris entre 0 et 6 inclus et $R_5$ est un radical alkyle en $C_1$—$C_4$.

12. Procédé selon la revendication 5, caractérisé en ce que les agents sequestrants de formule (II) sont greffés sur un support polymère organique réticulé et suivant une pluralité de groupes fontionnels de formule générale:

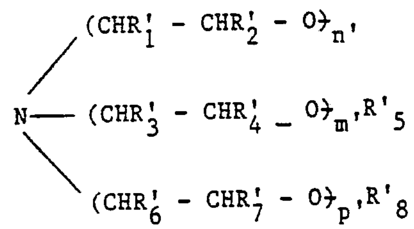

(III)

dans laquelle $R'_1$, $R'_2$, $R'_3$ $R'_4$, $R'_6$ et $R'_7$, identiques ou différents, sont chacun un atome d'hydrogène ou un radical alkyle ayant de 1 à 4 atomes de carbone, $R'_5$ et $R'_8$, identiques ou différents, représentent un atome d'hydrogène, un radical alkyle ou cycloalkyle ayant de 1 à 12 atomes de carbone, un radical phényle, un radical phénylalkyle ou alkylphényle dont la partie alkyle est en $C_1$—$C_{12}$ et dans laquelle n', m' et p', identiques ou différents, sont supérieurs ou égaux à 1 et inférieurs ou égaux à 10.

13. Procédé selon la revendication 12, caractérisé en ce que dans la formule (III), $R'_1$, $R'_2$, $R'_3$ $R'_4$, $R'_6$ et $R'_7$, identiques ou différents, représentent un atome d'hydrogène ou un radical méthyle et $R'_5$ et $R'_8$, identiques ou différents, représentent un atome d'hydrogène ou un radical alkyle en $C_1$—$C_4$, n', m' et p', identiques ou différents, sont compris entre 1 et 6 inclus.

14. Procédé selon l'une quelconque des revendications précédentes, caractérisé en ce que ladite mise en contact s'effectue au sein d'un solvant organique inerte chimiquement vis-à-vis des silanes et polysilanes introduits ou formée.

15. Procédé selon la revendication 14, caractérisé en ce que ledit solvant est l'anisole ou le chlorobenzène.

16. Procédé selon l'une quelconque des revendications précédentes, caractérisé en ce que ladite mise en contact est effectuée à une température comprise entre 80 et 200°C, de préférence entre 100 et 150°C.

17. Procédé selon l'une quelconque des revendications précédentes, caractérisé en ce que le rapport molaire du sel minéral ionique (a) au disilane de départ est compris entre 1 et 0,001 et en ce que le rapport molaire de l'agent compexant (b) au sel minéral ionique (a) est compris entre 0,001 et 10.

**Patentansprüche**

1. Verfahren zur Herstellung von Organosilanen und Organopolysilanen durch Inkontaktbringen von Organodisilanen in Gegenwart eines katalytischen Systems, dadurch gekennzeichnet, daß est beinhaltet das Inkontaktbringen unter inerter Atmosphäre von wenigstens (1) einem Disilan der Formel

$$(R)_3\text{—Si—Si—}(R)_3 \qquad \text{(I)}$$

worin die Reste R, die identisch oder verschieden sind, einen Kohlenwasserstoffrest, ausgewählt unter einem Alkylrest mit $C_1$—$C_6$, einem Wasserstoffatom, einem 3,3,3-Trifluorpropylrest, einem Trimethylsiloxyrest und einem Halogenatom , ausgewählt unter Fluor, Chlor, Brom und Jod, bedeuten, wobei wenigstens einer der Reste R ein Halogenatom ist, mit (2) einer katalytisch wirksamen Menge eines katalytischen Systems, umfassend

(a) wenigstens ein ionisches Mineralsalz der Formel $M^+A^-$, worin $M^+$ ein Kation eines Alkalimetalls, ausgewählt unter Lithium, Natrium, Kalium, Rubidium und Cäsium, bedeutet und $A^-$ ein Halogenidanion, ausgewählt unter einem Fluorid-, Chlorid-, Bromid- und Jodidanion, darstellt, und

(b) wenigstens eine Verbindung, die das Kation $M^+$ des genannten Salzes (a) komplexiert.

2. Verfahren gemäß Anspruch 1, dadurch gekennzeichnet, daß die komplexierende Verbindung (b) ein Sequestriermittel der Formel

$$N\text{—}[CHR_1 - CHR_2 - O\text{—}(CHR_3\text{—}CHR_4 - O)_n\text{—}R_5]_3 \qquad \text{(II)}$$

ist, worin n eine ganze Zahl zwischen 0 und 10 einschließlich ist; $R_1$, $R_2$, $R_3$ und $R_4$;, die identisch oder verschieden sind, ausgewählt sind unter einem Wasserstoffatom und einem Alkylrest mit $C_1$—$C_4$ und $R_5$ ist ein Rest, ausgewählt unter einem Alkyl- oder Cycloalkylrest mit $C_1$—$C_{12}$, einem Alkylphenyl- oder Phenylalkylrest, dessen Alkylteil mit $C_1$—$C_{12}$ ist.

3. Verfahren gemäß Anspruch 1, dadurch gekennzeichnet, daß die komplexierende Verbindung ein makrocyclischer Polyether mit 15 bis 30 Atomen im Ring ist und aus 4 bis 10 Einheiten —O—X besteht, worin X entweder —$CHR_6$—$CHR_7$— oder —$CHR_6$—$CHR_8$—$CR_9R_7$— ist, wobei $R_6$, $R_7$, $R_8$ und $R_9$, die identisch oder verschieden sind, ein Wasserstoffatom oder einen Alkylrest mit 1 bis 4 Kohlenstoffatomen bedeuten, wobei einer der Reste X —$CHR_6$—$CHR_8$—$CR_9R_7$— sein kann, wenn die Einheiten —O—X die Gruppierung —O—$CHR_6$—$CHR_7$— umfassen.

4. Verfahren gemäß Anspruch 1, dadurch gekennzeichnet, daß die komplexierende Verbindung eine makrocyclische oder bicyclische Verbindung der allgemeinen formel IIa oder IIb

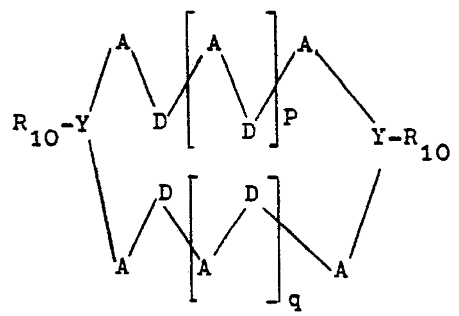

(IIa)

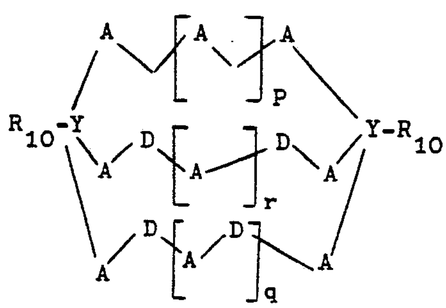

(IIb)

ist, worin

— Y bedeutet N oder P

— A eine Alkylengruppe mit 1 bis 3 Kohlenstoffatomen bedeutet,

— D bedeutet O, S oder N—$R_{11}$, wobei $R_{11}$ eine Alkylrest mit 1 bis 6 Kohlenstoffatomen darstellt,

— $R_{10}$ bedeutet einen Alkylrest mit 1 bis 6 Kohlenstoffatomen,

— p, q und r, die identisch oder verschieden sind, sind ganze Zahlen zwischen 1 und 5.

5. Verfahren gemäß Anspruch 1, dadurch gekennzeichnet, daß die komplexierende Verbindung ausgewählt ist unter den Sequestriermitteln, den makrocyclischen Polyethern und den makrocyclischen oder bicyclischen Verbindungen, die auf vernetzte, organische, polymere Träger gepfropft sind.

6. Verfahren gemäß einem der vorhergehenden Ansprüche, dadurch gekennzeichnet, daß auf wenigstens einem der Siliciumatome der Disilane der Formel (I) wenigstens zwei der Reste R ein Halogenatom bedeuten.

7. Verfahren gemäß einem der Ansprüche 1 bis 6, dadurch gekennzeichnet, daß in der Formel (I) die Reste R einen Methylrest oder ein Chloratom bedeuten.

8. Verfahren gemäß Anspruch 7, dadurch gekennzeichnet, daß die Disilane der Formel (I) ausgewählt sind unter 1,2-Dichlor-tetramethyldisilan, 1,1,2-Trichlortrimethyldisilan, 1,2-Dimethyl-tetrachlordisilan und 1,1-Dichlor-tetramethyldisilan.

9. Verfahren gemäß einem der vorhergehenden Ansprüche, dadurch gekennzeichnet, daß das Kation des ionischen Mineralsalzes $M^+A^-$ das Lithium ist.

10. Verfahren gemäß Anspruch 9, dadurch gekennzeichnet, daß das ionische Minersalz $M^+A^-$ ausgewählt ist unter Lithiumfluorid, -chlorid und -bromid.

11. Verfahren gemäß Anspruch 2, dadurch gekennzeichnet, daß in der Formel (II) die Reste $R_1$, $R_2$, $R_3$ und $R_4$ ein Wasserstoffatom oder einen Methylrest bedeuten, n zwischen 0 und 6 einschließlich liegt und $R_5$ ein Alkylrest mit $C_1$—$C_4$ ist.

12. Verfahren gemäß Anspruch 5, dadurch gekennzeichnet, daß die sequestrierenden Mittel der Formel (II) auf einen vernetzten, organischen, polymeren Träger gepfropft sind und gemäß einer Vielzahl von funktionellen Gruppen der allgemeinen Formel

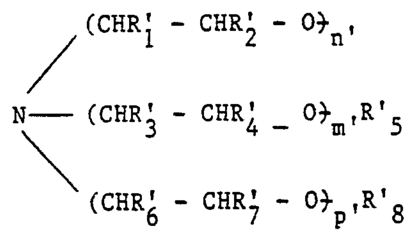

(III)

worin $R'_1$, $R'_2$, $R'_3$, $R'_4$, $R'_6$ und $R'_7$, die identisch oder verschieden sind, jeweils ein Wasserstoffatom oder einen Alkylrest mit 1 bis 4 Kohlenstoffatomen bedeuten, $R'_5$ und $R'_8$, die identisch oder verschieden sind, ein Wasserstoffatom, einen Alkyl- oder Cycloalkylrest mit 1 bis 12 Kohlenstoffatomen, einen Phenylrest, einen Phenylalkyl- oder Alkylphenylrest, dessen Alkylteil mit $C_1$—$c_{16}$ ist, bedeuten und worin n', m' und p', die identisch oder verschieden sind, größer oder gleich 1 sind und unterhalb oder gleich 10 sind.

13. Verfahren gemäß Anspruch 12, dadurch gekennzeichnet, daß in der Formel (III) $R'_1$, $R'_2$, $R'_3$, $R'_4$, $R'_6$ und $R'_7$, die identisch oder verschieden sind, ein Wasserstoffatom oder einen Methylrest bedeuten und $R'_5$ und $R'_8$, die identisch oder verschieden sind, ein Wasserstoffatom oder einen Alkylrest mit $C_1$—$C_4$ bedeuten und n', m' und p', die identisch oder verschieden sind, innerhalb 1 und einschließlich 6 liegen.

14. Verfahren gemäß einem der vorhergehenden Ansprüche, dadurch gekennzeichnet, daß das Inkontaktbringen in einem organischen Lösungemittel, das gegenüber den eingeführten oder gebildeten Silanen und Polysilanen chemisch inerte ist, durchgeführt wird.

15. Verfahren gemäß Anspruch 14, dadurch gekennzeichnet, daß das Lösungsmittel Anisol oder Chlorbenzol ist.

16. Verfahren gemäß einem der vorhergehenden Ansprüche, dadurch gekennzeichnet, daß das Inkontaktbringen bei einer Temperatur zwischen 80 und 200°C, vorzugsweist zwischen 100 und 150°C, durchgeführt wird.

17. Verfahren gemäß einem der vorhergehenden Ansprüche, dadurch gekennzeichnet, daß das Molverhältnis des ionischen Mineralsalzes (a) zum Ausgangs-Disilan zwischen 1 und 0,001 liegt und daß das Molverhältnis des komplexierenden Mittels (b) zum ionischen Mineralsalz (a) zwischen 0,001 und 10 liegt.

**Claims**

1. Process for the preparation of organosilanes and organopolysilanes by contacting organodisilanes in the presence of a catalyst system, characterized in that it includes contacting, in an inert atmosphere, at least (1) one disilane of formula

$$(R)_3\text{—Si—Si—}(R)_3 \qquad (I)$$

in which the radicals R, which are identical or different, denote a hydrocarbon radical chosen from a $C_1$—$C_6$ alkyl radical, a hydrogen atom, a 3,3,3-trifluoropropyl radical, a trimethylsiloxy radical and a halogen atom chosen from fluorine, chlorine, bromine and iodine, at least one of the radicals R being a halogen atom, with (2) a catalytically effective quantity of a catalyst system comprising (a) at least one ionic inorganic salt of formula $M^+A^-$ in which $M^+$ denotes a cation of an alkali metal chosen from lithium, sodium, potassium, rubidium and caesium and $A^-$ denotes a halide anion chosen from a fluoride, chloride, bromide and iodide anion and (b) at least one compound complexing the $M^+$ cation of the said salt (a).

2. Process according to Claim 1, characterized in that the complexing compound (b) is a sequestering agent of formula

$$N\left[CHR_1 - CHR_2 - O - (CHR_3 - CHR_4 - O)_n R_5\right]_3 \qquad (II)$$

in which n is an integer between 0 and 10 inclusive; $R_1$, $R_2$, $R_3$ and $R_4$, which are identical or different, are chosen from a hydrogen atom and a $C_1$—$C_4$ alkyl radical and $R_5$ is a radical chosen from a $C_1$—$C_{12}$ alkyl or cycloalkyl radical, and an alkylphenyl or phenylalkyl radical in which the alkyl moiety is $C_1$—$C_{12}$.

3. Process according to Claim 1, characterized in that the complexing compound is a macrocyclic polyether containing from 15 to 30 atoms in the ring and consisting of 4 to 10 —O—X units in which X is either —$CHR_6$—$CHR_7$— or —$CHR_6$—$CHR_8$—$CR_9R_7$—, $R_6$, $R_7$, $R_8$ and $R_9$, which are identical or different, being a hydrogen atom or an alkyl radical containing from 1 to 4 carbon atoms, one of the X being capable of being —$CHR_6$—$CHR_8$—$CR_9R_7$— when the —O—X units contain the group —O—$CHR_6$—$CHR_7$—.

4. Process according to Claim 1, characterized in that the complexing compound is a macrocyclic or bicyclic compound of the general formula IIa or IIb

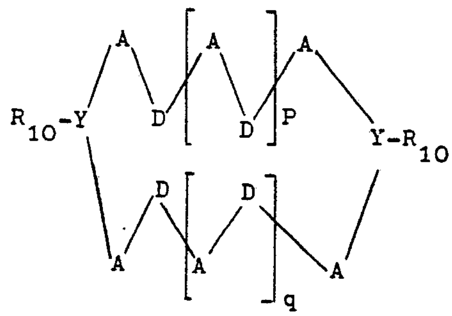

(IIa)

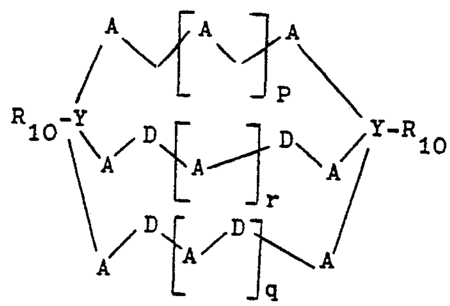

(IIb)

formulae in which:

— Y denotes N or P

— A denotes an alkylene group containing from 1 to 3 carbon atoms

— D denotes, O, S or N—$R_{11}$, where $R_{11}$ denotes an alkyl radical containing from 1 to 6 carbon atoms

— $R_{10}$ denotes an alkyl radical containing from 1 to 6 carbon atoms, and p, q and r which are identical or different, are integers from 1 to 5.

5. Process according to Claim 1, characterized in that the complexing compound is chosen from sequestering agents, macrocyclic polyethers and macrocyclic or bicyclic compounds, grafted on crosslinked organic polymer substrates.

6. Process according to any one of the preceding claims, characterized in that on at least one of the silicon atoms in the disilanes of the formula (I), at least two of the radicals R, is a halogen atom.

7. Process according to any one of Claims 1 to 6, characterized in that in the formula (I) the radicals R denote a methyl radical or a chlorine atom.

8. Process according to Claim 7, characterized in that the disilanes of the formula (I) are chosen from tetramethyl-1,2-dichlorodisilane, trimethyl-1,1,2-trichlorodisilane, tetrachloro-1,2-dimethyldisilane and tetramethyl-1,1-dichlorodisilane.

9. Process according to any one of the preceding claims, characterized in that the cation in the ionic inorganic salt $M^+A^-$ is lithium.

10. Process according to Claim 9, characterized in that the ionic inorganic salt $M^+A^-$ is chosen from lithium fluoride, chloride and bromide.

11. Process according to Claim 2, characterized in that in the formula (II) the radicals $R_1$, $R_2$, $R_3$ and $R_4$ denote a hydrogen atom or a methyl radical, n is from 0 to 6 inclusive and $R_5$ is a $C_1$—$C_4$ alkyl radical.

12. Process according to Claim 5, characterized in that the sequestering agents of the formula (II) are grafted on a crosslinked organic polymer substrate and in accordance with a plurality of functional groups of general formula:

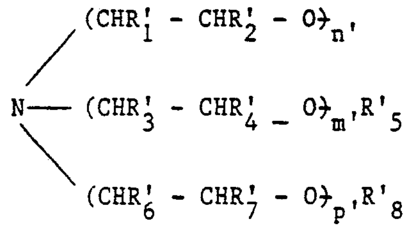

(III)

in which $R'_1$, $R'_2$, $R'_3$, $R'_4$, $R'_6$ and $R'_7$, which are identical or different, are each a hydrogen atom or an alkyl radical containing from 1 to 4 carbon atoms, $R'_5$ and $R'_8$, which are identical from 1 to 4 carbon atoms, $R'_5$ and $R'_8$, which are identical or different, denote a hydrogen atom, an alkyl or cycloalkyl radical containing from 1 to 12 carbon atoms, a phenyl radical, a phenylalkyl or alkylphenyl radical in which the alkyl moiety is

$C_1$—$C_{12}$ and in which formula n', m' and p', which are identical or different, are greater than or equal to 1 and smaller than or equal to 10.

13. Process according to Claim 12, characterized in that in the formula (III) $R_1'$, $R_2'$, $R_3'$, $R_4'$, $R_6'$ and $R_7'$, which are identical or different, denote a hydrogen atom or a methyl radial, and $R_5'$ and $R_8'$, which are identical or different, denote a hydrogen aotm or a $C_1$—$C_4$ alkyl radical, and n', m' and p', which are identical or different, are from 1 to 6 inclusive.

14. Process according to any one of the preceding claims, characterized in that the said contacting is carried out in an organic solvent which is chemically inert towards silanes and polysilanes which are introduced or formed.

15. Process according to Claim 14, characterized in that the said solvent is anisole or chlorobenzene.

16. Process according to any one of the preceding claims, characterized in that the said contacting is carried out at a temperature between 80 and 200°C, preferably between 100 and 150°C.

17. Process according to any one of the preceding claims, characterized in that the molar ratio of the ionic inorganic salt (a) to the starting disilane is from 1 to 0.001, and the molar ratio of the complexing agent (b) to the ionic inorganic salt (a) is from 0.001 to 10.